Europäisches Patentamt

European Patent Office

Office européen des brevets

(19)

(11) Veröffentlichungsnummer : **0 158 907**
**B1**

(12) **EUROPÄISCHE PATENTSCHRIFT**

(45) Veröffentlichungstag der Patentschrift : **17.08.88**

(51) Int. Cl.⁴ : **B 60 R 25/02**

(21) Anmeldenummer : **85103856.2**

(22) Anmeldetag : **30.03.85**

(54) **Zylinderschloss.**

(30) Priorität : **14.04.84 DE 3414277**

(43) Veröffentlichungstag der Anmeldung :
**23.10.85 Patentblatt 85/43**

(45) Bekanntmachung des Hinweises auf die Patenterteilung : **17.08.88 Patentblatt 88/33**

(84) Benannte Vertragsstaaten :
**DE FR GB IT SE**

(56) Entgegenhaltungen :
**WO-A-83 /035 80**
**WO-A-83 /042 28**
**DE-A- 2 059 215**
**DE-B- 1 293 049**
**DE-B- 1 293 050**
**FR-A- 2 283 287**
**GB-A- 1 540 258**

(73) Patentinhaber : **NEIMAN**
**39 Avenue Marceau**
**F-92400 Courbevoie (FR)**

(72) Erfinder : **Weber, Günter**
**Bergerheide 54**
**D-5600 Wuppertal 1 (DE)**

(74) Vertreter : **Patentanwaltsbüro Cohausz & Florack**
**Postfach 14 01 47**
**D-4000 Düsseldorf 1 (DE)**

EP 0 158 907 B1

## Beschreibung

Die Erfindung betrifft ein Zylinderschloß, insbesondere Lenkschloß für ein Kraftfahrzeug, mit einem axial durch den Schlüssel beweglichen Zylinderkern, mit mindestens einem durch den Zylinderkern betätigbaren Sperrteil, insbesondere Sperriegel, das über ein Übertragungsteil von einem durch den zylinderkern betätigbaren Exzenter, Nocken oder einer Kurvenscheibe in die nicht sperrende Stellung bewegbar ist wobei der Sperriegel in der nicht sperrenden Stellung durch ein koaxial zur Zylinderachse angeordnetes, axial gegen Federdruck zum Zylinderkern hin bewegliches und kippbares Teil gehalten ist, bis durch Schlüsselabzug der Zylinderkern in die Anfangsstellung zurückbewegt und das axial bewegliche Teil aus der das Übertragungsteil sperrenden Stellung gezogen wird.

Aus der WO83/04 228 ist ein solches Zylinderschloß bekannt. Beim Eindrücken des Schlüssels müssen zwei Rollen gegen Federdruck verdrängt werden, so daß das Einführen eines Schlüssels eine höhere Kraft erfordert als bei anderen Schlössern.

Ferner ist es aus den DE-ASen 12 93 049 und 20 59 215 bekannt, eine zum Zylinderkern koaxiale bzw. achsparallele Scheibe nicht nur drehbar, sondern auch kippbar zu lagern, um die Sperrbereitschaftsstellung des Sperriegels aufrechtzuerhalten und nach Schlüsselabzug zu beenden.

Aufgabe der Erfindung ist es, ein Schloß der eingangs genannten Art derart zu verbessern, daß bei Einführen des Schlüssels ein Federdruck nicht überwunden werden muß.

Diese Aufgabe wird erfindungsgemäß dadurch gelöst, daß das axial bewegliche Teil auf der dem Zylinderkern abgewandten Seite eine Schrägfläche aufweist, an der ein Bereich des Übertragungsteils entlanggleitet, um das axial bewegliche Teil gegen Federdruck zum Zylinderkern hin zu bewegen, und daß auf der dem Zylinderkern zugewandten Seite des axial beweglichen Teils koaxial ein axial beweglicher Ring angeordnet ist, der von einer zweiten in derselben Richtung wie die erste Feder wirkenden Feder beaufschlagt ist und gegen den Druck dieser zweiten Feder durch das axial bewegliche Teil kippbar ist.

Bei dieser Konstruktion wird der Federdruck, der erforderlich ist, um nach Schlüsselabzug den Zylinderkern in die äußere Stellung zu bringen, in der die Sperrbereitschaftsstellung aufgehoben wird, dadurch erzeugt, daß erst durch Drehen des Schlüssels der hierfür erforderliche Federdruck aufgebaut wird. Während beim Einschieben des Schlüssels der Zylinderkern einem Federdruck nicht ausgesetzt ist und somit verschiedene axiale Stellungen einnehmen kann und den Schlüssel in jeder dieser Stellungen leicht aufnimmt, wird nach Einschieben des Schlüssels durch eine bestimmte Einrichtung, insbesondere ein Rollenpaar, sichergestellt, daß der Zylinderkern die äußere Stellung nicht mehr einnehmen kann, so daß der durch das Drehen des Schlüssels aufgebaute Federdruck ein Bewegen des Zylinderkerns in die äußere Stellung nicht bewirken kann. Diese äußere Stellung nimmt der Zylinderkern erst ein, nachdem der Schlüssel vollständig abgezogen ist und der Zylinderkern durch den inzwischen aufgebauten Federdruck dorthin bewegt wird.

Die Konstruktion hat darüber hinaus die Vorteile einer einfachen Bauweise und preswerten Herstellung, da die meisten Teile, insbesondere auch die den Federdruck aufbauenden und die Sperrbereitschaftsstellung erzeugenden Teile, rotationssymmetrisch sein können. Hierdurch entsteht auch eine hohe Funktionssicherheit und eine sehr einfache Montage, da es gleichgültig ist, welche Drehstellung die rotationssymmetrischen Teile einnehmen.

Vorteilhafte Ausgestaltungen der Erfindung sind in den Unteransprüchen aufgeführt.

Ein Ausführungsbeispiel der Erfindung ist in der Zeichnung dargestellt und wird im folgenden näher beschrieben. Es zeigen :

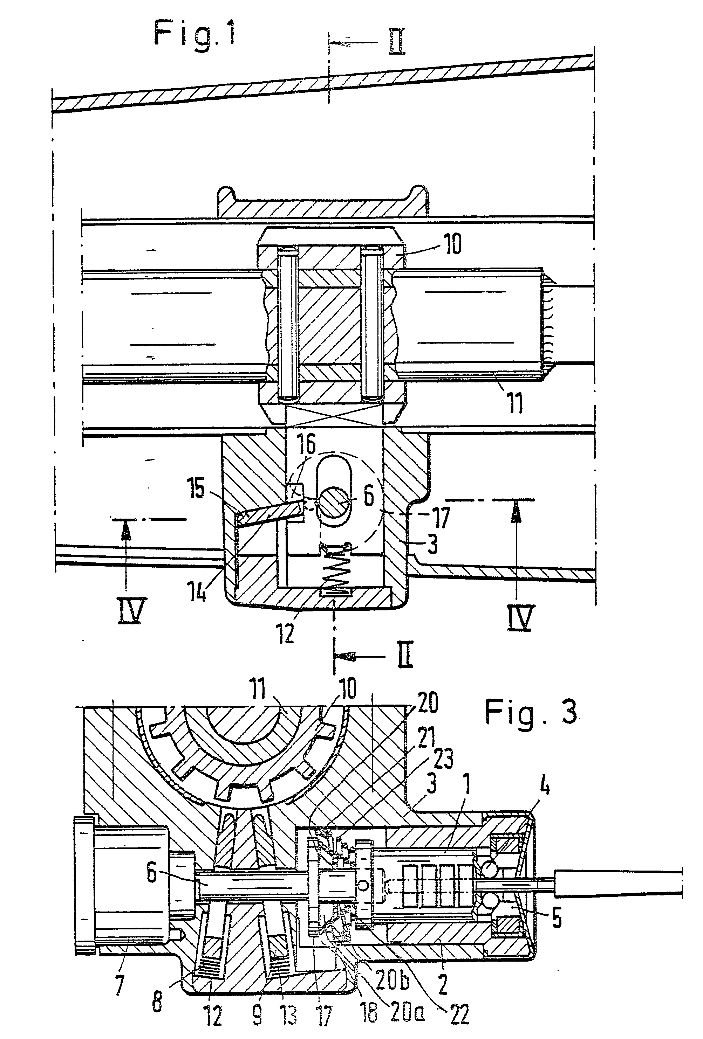

Fig. 1 einen Längsschnitt durch eine Lenksäule eines Kraftfahrzeuges ;

Fig. 2 einen Querschnitt durch die Lenksäule nach II-II in Fig. 1 bei abgezogenem Schlüssel ;

Fig. 3 einen Schnitt entsprechend Fig. 2 bei eingestecktem Schlüssel und Sperrbereitschaftsstellung ;

Fig. 4 einen Schnitt nach IV-IV in Fig. 1 bei Schlüsselabzug.

Das Ausführungsbeispiel zeigt eine Schloßart, wie sie ausführlich in der WO83/04 228 beschrieben ist. Zu der Arbeitsweise der beiden Sperriegel und deren Betätigung durch eine Mitnehmerplatte wird auf diese beiden Patentanmeldungen Bezug genommen.

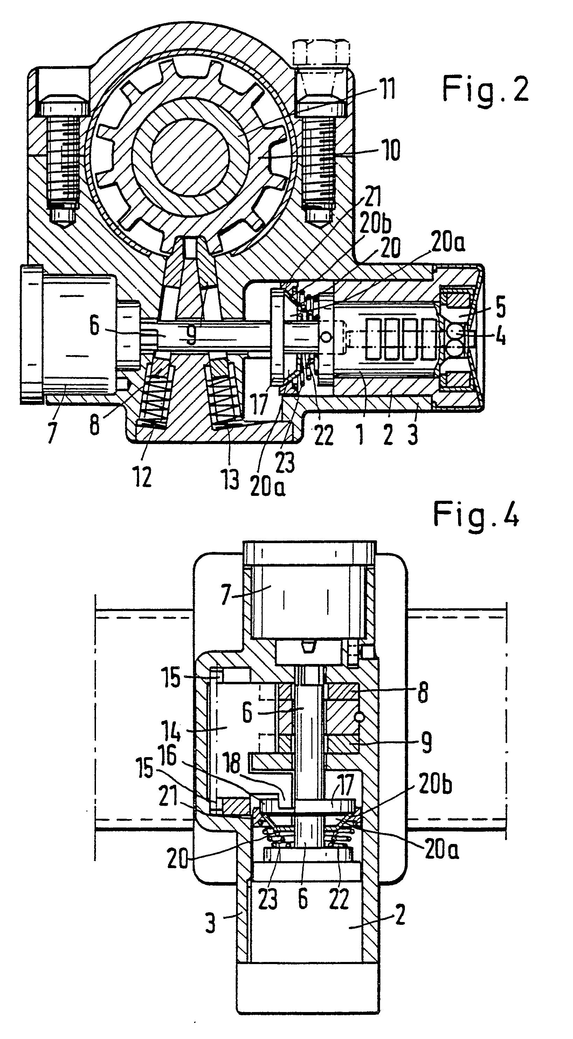

Der Zylinderkern ist koaxial in einem Schließzylinder 2 drehbar gelagert, der in ein Schloßaufnahmegehäuse 3 eingesteckt ist. Im Zylinderkern 1 ist auf der Schlüsseleinführungsseite der Schlüsselkanal durch zwei Rollen 4 versperrt, wenn der Zylinderkern in der äußeren, in Fig. 2 gezeigten Stellung steht, wobei dann die beiden Rollen aneinander anliegen und außen durch Kurvenstücke 5 geführt sind, die ein Bewegen der Rollen nach außen in dieser Stellung verhindern. Diese Konstruktion ist ausführlich in der DE-AS 24 41 463 beschrieben. Erst nach einem Bewegen des Zylinderkerns 1 schloßeinwärts gelangen die Rollen unterhalb der Kurvenstücke 5, so daß sie sich in entgegengesetzten Richtungen nach außen bewegen können. Dies geschieht durch Eindrücken des Schlüssels oder aber auch zufällig durch Trägheitskräfte, da in der Schlüsselabzugsstellung der Zylinderkern nicht federbeaufschlagt ist und damit sich frei axial in beide Stellungen bewegen kann.

Am inneren Ende des Zylinderkerns 1 ist koaxial eine achsförmige Verlängerung 6 angeformt (Schaltwalze), die im elektrischen Schalter 7 des Schlosses endet und diesen betätigt. Zwischen Zylinderkern 1 und Schalter 7 durchdringt die Verlängerung 6 zwei Sperriegel 8, 9, die in der sperrenden Stellung in die Ausnehmungen einer sternförmigen Buchse 10 eindringen, die auf der Lenksäule 11 drehfest angeordnet ist.

Beide Sperriegel 8, 9 sind durch Federn 12, 13 zur Lenksäule hin belastet und werden gegen den Druck dieser Federn in die freigebende Stellung durch eine Mitnehmerplatte 14 bewegt, die um eine parallel zur Zylinderkernachse liegende Achse verschwenkbar ist. Zur Betätigung der beiden plattenförmigen Sperriegel 8, 9 weisen diese Ausnehmungen auf, in die die Mitnehmerplatte hineinragt. Zur Betätigung der Mitnehmerplatte 14 ist auf der Verlängerung 6 eine Kurvenscheibe 17 quer zur Verlängerungsachse 6 koaxial angeformt, die über ca. 250° kreisförmig ist und im verbleibenden Winkelbereich eine Ausnehmung 16 aufweist, in die ein zur Achse 15 paralleler Finger 18 der Mitnehmerplatte 14 einfällt, wenn der Zylinderkern 1 in der Schlüsselabzugsdrehstellung steht. Im übrigen Drehbereich des Zylinderkerns 1, und damit auch der Kurvenscheibe 17, liegt der Finger 18 außen auf dem kreisförmigen Bereich der Kurvenscheibe 17 an. Wird nach Einstecken des Schlüssels die Kurvenscheibe 17 aus der in den Figuren 2 und 4 gezeigten Stellung herausgedreht, so hebt die die Ausnehmung der Kurvenscheibe 17 bildende Kurve den Finger 18 und damit die Mitnehmerplatte 14 an, die durch diese Schwenkbewegung die Sperriegel 8, 9 aus ihrer sperrenden Stellung herauszieht. Der Finger 18 bleibt dann in der Fahrt- und Anlaßstellung auf dem kreisförmigen Bereich der Kurvenscheibe 17 liegen, so daß die Sperriegel in der entsperrten Stellung verharren.

Im Zwischenraum zwischen der Kurvenscheibe 17 und dem inneren Ende des Zylinderkerns 1 ist auf der achs- oder walzenförmigen Verlängerung 6 ein kreisförmiger Teller 20 koaxial gelagert, der mittig eine kreisförmige Öffnung aufweist, die von der Verlängerung 6 durchdrungen ist. Die Vertiefung 20a des Tellers 20 ist dem Zylinderkern abgewandt und von der Kurvenscheibe 17 verschlossen. Der Teller 20 weist einen kegelstumpfförmigen Rand 20b auf, dessen Durchmesser zum Zylinderkern 1 hin abnimmt. Der äußere Durchmesser des Tellers 20 ist gleich oder nur wenig größer als der kreisförmige Bereich der Kurvenscheibe 17. Der Teller 20 ist von einem Ring 21 umgeben, der koaxial zur Zylinderachse liegt und, wie auch der Teller 20 gegenüber der Verlängerung 6, verschieblich und begrenzt kippbar bzw. verschwenkbar ist. Teller 20 und Ring 21 werden jeweils durch eine kegelstumpfförmige Schraubendruckfeder von dem Zylinderkern 1 weg zur Kurvenscheibe 17 hin gedrückt, wobei die beiden Federn koaxial zueinander und zur Verlängerung 6 liegen und die Feder 22 des Tellers von der Feder 23 des Ringes umgeben ist. Mit ihren Enden geringeren Durchmessers liegen die Federn 22, 23 am inneren Ende des Zylinderkerns 1 an und mit ihren gegenüberliegenden Enden am Teller bzw. Ring. Der Teller 20 wird durch die Feder 22 gegen die Seitenfläche der Kurvenscheibe 17 und der Ring 21 mit seiner kegelstumpfförmigen Öffnung an die Außenfläche des Randes 20b des Tellers 20 gedrückt.

Befindet sich in der Schlüsselabzugsstellung der Zylinderkern 1 in der nach innen verschobenen Lage, so ragt der Finger 18 in die Ausnehmung bzw. Vertiefung 20a des Tellers 20 hinein. Dies geschieht auch dann, wenn der Schlüssel in den Zylinderkern eingesteckt wird, da in dem Fall, in dem der Zylinderkern zufällig die äußere axiale Stellung einnimmt, der Zylinderkern mit der Verlängerung 6 und den darauf befindlichen Teilen 17 und 20 bis 23 zur inneren Stellung hin bewegt wird. Wird nun in dieser Stellung durch den Schlüssel der Zylinderkern verdreht, so verschwenkt die Kurve der Kurvenscheibe 17 die Mitnehmerplatte 14, um die Sperriegel 8, 9 aus der sperrenden Stellung herauszuziehen. Während dieses Verschwenkens der Mitnehmerplatte 14 gelangt der Finger 18 an den Rand 20b des Tellers 20 und verkippt oder verschwenkt den Teller 20 zusammen mit dem Ring 21 gegen den Druck der beiden Federn 22, 23. Hat der Finger 18 den äußeren kreisförmigen Rand der Kurvenscheibe 17 erreicht, so steht der Finger 18 weiter von der Achse der Verlängerung 6 ab als der Radius des Tellers 20, so daß der Teller 20 in die zur Achse rechtwinklige Stellung zurückrastet aufgrund des Druckes der Feder 22. Der einen größeren Durchmesser als der des Tellers aufweisende Ring 21 liegt aber jetzt am Ende des Fingers 18 an, so daß der Ring 21 verkippt bleibt. Hierdurch bleibt die Feder 23 gespannt, so daß nach Zurückdrehen des Schlüssels in die Schlüsseleinsteckstellung, und damit in der Sperrbereitschaftsstellung, (Fig. 3), der Zylinderkern durch die Feder 23 nach außen druckbeaufschlagt ist, da der Ring 21 sich weiterhin an dem Finger 18 abstützt. Wird nunmehr der Schlüssel abgezogen, so verbleibt der Zylinderkern 1 so lange in der inneren Stellung, bis der Schlüssel vollständig abgezogen ist, da die Rollen 4 ein Zurückbewegen des Zylinderkerns 1 in die äußere Stellung so lange verhindern, so lange sich zwischen den Rollen 4 der Schlüssel befindet. Die Rollen 4 liegen hierbei sperrend an den inneren Enden der Kurvenstücke 5 an.

Wird der Schlüssel vollständig abgezogen, so lassen die Rollen 4 eine Bewegung des Zylinderkerns nach außen zu, so daß die Feder 23 den Zylinderkern nach außen drückt, wobei der Zylinderkern den Teller 20 und die Kurvenscheibe 17 mitnimmt. Hierdurch gelangt der Finger 18 außerhalb des Bereichs des Tellers 20, so daß der Finger 18 in die Ausnehmung der Kurvenscheibe 17 einfällt und damit die Mitnehmerplatte 14 zurückgeschwenkt wird, da diese durch die Federn 12, 13 der Sperriegel 8, 9 beaufschlagt ist. Durch dieses Zurückschwenken bewegen sich die Sperriegel 8, 9 zur Lenkspindel hin, so daß wenigstens einer der beiden Sperriegel in eine der Ausnehmungen der Buchse 10 einfällt.

**Patentansprüche**

1. Zylinderschloß, insbesondere Lenkschloß für ein Kraftfahrzeug, mit einem axial durch den Schlüssel beweglichen Zylinderkern (1), mit mindestens einem durch den Zylinderkern betätigbaren Sperrteil (8, 9), insbesondere Sperrriegel, das über ein Übertragungsteil (14) von einem durch den Zylinderkern betätigbaren Exzenter, Nocken oder einer Kurvenscheibe (17) in die nicht sperrende Stellung bewegbar ist, wobei das Sperrteil (8, 9) in der nicht sperrenden Stellung durch ein koaxial zur Zylinderachse angeordnetes, axial gegen Federdruck (22) zum Zylinderkern (1) hin bewegliches und kippbares Teil (20) gehalten ist, bis durch Schlüsselabzug der Zylinderkern (1) in die Anfangsstellung zurückbewegt und das axial bewegliche Teil (20) aus der das Übertragungsteil (14) sperrenden Stellung gezogen wird, dadurch gekennzeichnet, daß das axial bewegliche Teil (20) auf der dem Zylinderkern (1) abgewandten Seite eine Schrägfläche (20b) aufweist, an der ein Bereich (18) des Übertragungsteils (14) entlanggleitet, um das axial bewegliche Teil (20) gegen Federdruck zum Zylinderkern (1) hin zu bewegen, und daß auf der dem Zylinderkern zugewandten Seite des axial beweglichen Teils (20) koaxial ein axial beweglicher Ring (21) angeordnet ist, der von einer zweiten in derselben Richtung wie die erste Feder (22) wirkenden Feder (23) beaufschlagt ist und gegen den Druck dieser zweiten Feder (23) durch das axial bewegliche Teil (20) kippbar ist.

2. Zylinderschloß nach Anspruch 1, dadurch gekennzeichnet, daß das axial bewegliche Teil (20) ein kreisförmiger Teller ist, dessen Vertiefung (20a) dem Zylinderkern (1) abgewandt ist und der eine mittige Öffnung hat, die von einer Verlängerung (6) des Zylinderkerns (1) und/oder einer Schaltwalze durchdrungen ist.

3. Zylinderschloß nach Anspruch 1 oder 2, dadurch gekennzeichnet, daß die beiden, den Ring (21) und das axial bewegliche Teil (20) beaufschlagenden Federn (22, 23) kegelförmig sind und die Feder (23) des Ringes (21) die Feder (22) des Tellers (20) koaxial umgibt.

## Claims

1. Cylinder lock, particularly a steering lock for a motor vehicle, comprising a cylinder core (1) axially movable by the key, and with at least one locking member (8, 9), particularly a locking bolt, which can be actuated by the cylinder core and which is adapted to be moved via a transmission member (14) by a cam, eccentric member or cam plate (17) which can be actuated by the cylinder core, into the non-locking position, the locking member (8, 9) being maintained in the non-locking position by a part (20) disposed coaxially of the cylinder axis and adapted to be moved and tilted axially against spring pressure (22) and in relation to the cylinder core (1) until, by withdrawal of the key, the cylinder core (1) moves back into the starting position, the axially movable part (20) being pulled out of the position in which it locks the transmission part (14), characterised in that the axially movable part (20) has on the side remote from the cylinder core (1) an oblique face (20b) on which slides an area (18) of the transmission part (14) so that the axially movable part (20) can be moved against spring pressure towards the cylinder core (1) and in that on the side of the axially movable part (20) which is towards the cylinder core, there is coaxially disposed an axially movable ring (21) biased by a second spring (23) acting in the same direction as the first spring (22), being tilted by the axially movable part (20) against the thrust of this second spring (23).

2. Cylinder lock according to Claim 1, characterised in that the axially movable part (20) is a circular plate, in which the depression (20a) is facing away from the cylinder core (1), the part (20) comprising a central aperture through which passes an extension (6) of the cylinder core (1) and/or of a switching roller.

3. Cylinder lock according to Claim 1 or 2, characterised in that the two springs (22, 23) which bias the ring (21) and the axially movable part (20) are of conical shape, the spring (23) of the ring (21) coaxially surrounding the spring (22) of the plate (20).

## Revendications

1. Serrure à cylindre, en particulier antivol de direction pour un véhicule automobile, avec un barillet (1) mobile axialement par la clé, avec au moins une pièce de verrouillage (8,9), en particulier pêne de verrouillage, pouvant être actionné par la pièce de verrouillage, qui peut être déplacée en position de non verrouillage, par l'intermédiaire d'une pièce de transmission (14), par un excentrique, une came, ou un disque à came (17) pouvant être actionné par le barillet, la pièce de verrouillage (8,9) étant maintenue en position de non-verrouillage par une pièce (20) disposée coaxiale à l'axe du barillet, mobile axialement en direction du barillet (1) contre une pression de ressort (22) et basculante, jusqu'à ce que le barillet (1) revienne en position de départ par retrait de la clé et que la pièce (20) mobile axialement soit tirée de la position de verrouillage de la pièce de transmission (14), caractérisée par le fait que la pièce (20) mobile axialement présente sur sa face opposée au barillet une surface oblique (20b) sur laquelle glisse une zone (18) de la pièce de transmission (14) pour déplacer la pièce (20) mobile axialement en direction du barillet (1) contre la pression de ressort, et qu'une bague (21) mobile axialement est disposée coaxialement sur la face de la pièce (20) mobile axialement tournée vers le barillet qui est soumise à l'action d'un second ressort (23) agissant dans la même direction que le premier ressort (22) et peut être basculée par la pièce (20) mobile axialement contre la pression de ce second ressort (23).

2. Serrure à cylindre selon la revendication 1, caractérisée par le fait que la pièce (20) mobile axialement est une assiette circulaire dont le creux (20a) est opposé au barillet (1) et qui présente une ouverture médiane qui est traversée par un prolongement (6) du barillet (1) et/ou d'un commutateur à cames.

3. Serrure à cylindre selon la revendication 1 ou 2, caractérisée par le fait que les deux ressorts (22,23) agissant sur la bague (21) et la pièce mobile (20) sont coniques et le ressort (23) de la bague (21) entoure coaxialement le ressort (22) de l'assiette (20).

0 158 907

Fig.1

Fig. 3

**0 158 907**

Fig. 2

Fig. 4